**Europäisches Patentamt**

**European Patent Office**

**Office européen des brevets**

(11) Veröffentlichungsnummer: **0 173 971**
**B1**

## EUROPÄISCHE PATENTSCHRIFT

(45) Veröffentlichungstag der Patentschrift:
**27.09.89**

(51) Int. Cl.⁴: **G01N 15/08**, G01N 33/24

(21) Anmeldenummer: **85110907.4**

(22) Anmeldetag: **29.08.85**

(54) **Auffangbehälter für Versickerungsmesser.**

(30) Priorität: **01.09.84  DE 3432264**

(43) Veröffentlichungstag der Anmeldung:
**12.03.86 Patentblatt 86/11**

(45) Bekanntmachung des Hinweises auf die Patenterteilung:
**27.09.89 Patentblatt 89/39**

(84) Benannte Vertragsstaaten:
**DE FR GB NL**

(56) Entgegenhaltungen:
**DE-C- 724 626**
**FR-A- 990 070**
**FR-A- 2 367 282**

(73) Patentinhaber: **Bergwerksverband GmbH,**
**Franz-Fischer-Weg 61, D-4300 Essen 13(DE)**

(72) Erfinder: **Hünert, Rudolf, Dipl.-Chem., Alter Weg 1,**
**D-5810 Witten(DE)**
Erfinder: **Frigge, Joachim, Auf der Litten 100,**
**D-4300 Essen 1(DE)**

ACTORUM AG

## Beschreibung

Die Erfindung betrifft einen Auffangbehälter für Versickerungsmesser (Lysimeter) gemäß dem Oberbegriff des Anspruchs 1.

Unter einem Versickerungsmesser versteht man eine Anordnung, die aus dem Auffangbehälter mit Bodenplatte und Filterbuchse mit Kiesfüllungen, dem Einlaufschacht und dem Regenmesser besteht. Eine solche Anordnung ist beispielsweise von W. Friedrich und H. Franzen in "Deutsche Gewässerkunde", Mitteilungen, Jg. 44, Seite 105 - 111 beschrieben worden. Hierbei ist der Auffangbehälter jeweils mit einer zu untersuchenden Materialprobe gefüllt, deren Eluationsverhalten, während sie von einem Eluationsmittel durchströmt wird, untersucht werden soll. Der bekannte Auffangbehälter besteht aus einer zylindrischen metallischen Röhre mit einer Querschnittsfläche von 1 m² und besitzt einen abgeschrägten Boden mit einer Filterbuchse zur Entnahme des Eluats.

Bei einer anderen bekannten Lysimeteranlage wird das Eluat über in unterschiedlichen Höhen integrierte Träufelrinnen aus den Auffangbehältern entnommen.

Im Rahmen einer Untersuchung der Mobilisierbarkeit von Spurenelementverbindungen aus Kraftwerksaschen, Kraftwerksschlacken und Filterstäuben auf Deponien war eine Verbesserung des bekannten Auffangbehälters erforderlich, weil bei den bisher bestehenden Anordnungen die Strömungsverhältnisse im Füllkörper durch Randeffekte und den Flüssigkeitsabzug über Träufelrinnen verändert werden und weil die Träufelrinnen den Luftzutritt in das Innere des Füllkörpers erlauben und damit chemische und mikrobielle Reaktionen beeinflußt werden. Die Verhältnisse im Inneren eines derartigen Lysimeters sind auf diese Weise nicht mehr vergleichbar mit denen einer realen Deponie. Es ist deshalb Aufgabe der vorliegenden Erfindung, eine verbesserte Ausführung für den Auffangbehälter zu finden, die allen Anforderungen an die Messungen gerecht wird.

Diese Aufgabe wird durch eine Ausbildung des Auffangbehälters des Lysimeters gemäß dem Kennzeichen des Anspruchs 1 gelöst.

Weitere Ausgestaltungen des Auffangbehälters des Lysimeters gemäß dem Kennzeichen des Anspruchs 1 werden derartige Störungen ausgeschlossen. - Dabei ist es zur Vermeidung von Rand/Wandeffekten wesentlich, daß eine Teilung des Flüssigkeitsstromes in Zentralstrom und Rand/Wandstrom unterhalb des Füllkörpers innerhalb der Kiesfüllung vorgenommen wird. Nur so kann vermieden werden, daß die Trennwand selbst Ursache für Rand/Wandeffekte wird.

Um den Flüssigkeitsstrom in verschiedenen Höhen des Füllkörpers analysieren zu können und Daten über das Eluationsverhalten entlang des Sickerweges zu erhalten, werden vielfach Träufelrinnen eingesetzt, mit denen das Eluat aus verschiedenen Höhen abgezogen wird. Dadurch werden aber die Strömungsverhältnisse im Füllkörper entscheidend verändert. Außerdem erhält Luft Zutritt zum Inneren des Füllkörpers. Dieses beeinflußt chemische und mikrobielle Prozesse und führt dazu, daß der Füllkörper nicht mit einer Deponie vergleichbar ist, in der solche Prozesse unter anaeroben Bedingungen ablaufen.

Die Tauchrohre, die ebenfalls eine Erfassung des Flüssigkeitsstromes in verschiedenen Höhen gestatten, verursachen die oben beschriebenen negativen Effekte nicht. Sie sind erfindungsgemäß im Zentralbereich und im Rand/Wandbereich angeordnet.

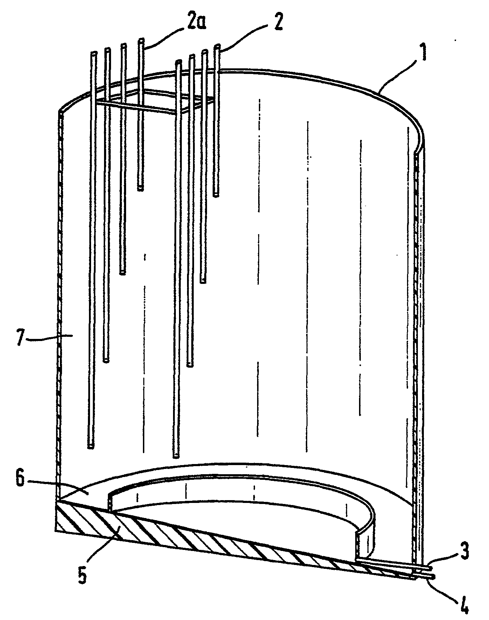

Weitere Merkmale und Ausgestaltungen des erfindungsgemäßen Auffangbehälters werden anhand der Zeichnung näher beschrieben. Die Figur zeigt einen senkrechten Schnitt durch den Auffangbehälter des Versickerungsmessers in isometrischer Ansicht.

Gemäß der Figur besteht der Auffangbehälter eines Lysimeters aus einem zylindrischen, oben offenen Hohlkörper 1, der einen zu einer Seite hin abgeschrägten Boden 5 besitzt. Dieser Behälterboden besitzt ein zentrales Abflußrohr 3 sowie ein Abflußrohr 4 aus der äußeren Randzone des Behälterbodens. Der Behälterboden 5 ist mit einer Schicht 6 aus Filterkies des Durchmessers < 1 bis 30 mm bedeckt.

Oberhalb dieser Kiesschicht befindet sich das auf sein Eluationsverhalten zu untersuchende Material 7. Die aus Rohren steigender Länge bestehenden Tauchrohrbündel 2 befinden sich im Zentralbereich und 2a in der Randzone des zu untersuchenden Materials 7.

Ein solcher Auffangbehälter kann sowohl zur Untersuchung des Eluationsverhaltens von zu deponierenden Materialien vor ihrer Deponierung verwendet werden, als auch in Deponien selbst eingebaut werden, um das Langzeitverhalten von deponierten Materialien zu kontrollieren.

## Patentansprüche

1. Auffangbehälter für Versickerungsmesser, Lysimeter, bestehend aus einem oben offenen, zylindrischen Hohlkörper (1) mit einem abgeschrägten Boden (5) und einem Abfluß oberhalb des Bodens, gekennzeichnet durch

1. einen zentralen Abfluß (3) im abgeschrägten Boden (5) und

1.1 einen Abfluß (4) aus der Randzone des Bodens,

2. eine Kiesfilterschicht (6) auf dem Boden,

3. ein Tauchrohrbündel (2) aus vier oder mehr Rohren zunehmender Länge im Zentralbereich des zu messenden Materials und

3.3 ein solches Tauchrohrbündel (2a) in der Randzone des zu messenden Materials.

2. Auffangbehälter nach Anspruch 1, dadurch gekennzeichnet, daß alle Teile aus unpolaren und inerten Kunststoffen bestehen.

3. Auffangbehälter nach Anspruch 2, dadurch gekennzeichnet, daß alle Teile aus Polyethylen oder Polypropylen bestehen.

4. Auffangbehälter nach Anspruch 2 und 3, dadurch gekennzeichnet, daß die Kunststoffteile durch thermisches Verschweißen miteinander verbunden sind.

## Claims

1. A collecting container for seepage meters, lysimeters, consisting of a cylindrical hollow body (1) which is open at the top and has an inclined floor (5) and an outflow above the floor, characterised by
  1. a central outflow (3) in the inclined floor (5) and
  1.1 an outflow (4) from the edge area of the floor,
  2. a gravel filter layer (6) on the floor,
  3. a bundle (2) of immersion pipes consisting of four or more pipes of increasing length in the central region of the material to be measured, and
  3.3 a like bundle (2a) of immersion pipes in the edge area of the material to be measured.

2. A collecting container according to Claim 1, characterised in that all the parts consist of non-polar and inert plastics materials.

3. A collecting container according to Claim 2, characterised in that all the parts consist of polyethylene or polypropylene.

4. A collecting container according to Claim 2 and 3, characterised in that the plastics material parts are joined together by thermal welding.

## Revendications

1. Récipient collecteur pour un appareil de mesure d'infiltrations ou lysimètre, consistant en un corps creux (1) cylindrique, ouvert en haut, avec un fond en biseau (5) et un départ de liquide au-dessus du fond, caractérisé par:
  1) un départ central (3) dans le fond (5) en biseau, et
  1.1) un départ (4) à partir de la zone de bord du fond,
  2) une couche de gravier filtrant (6) sur le fond,
  3) un faisceau de tuyaux plongeurs (2) comprenant quatre tuyaux ou davantage, de longueurs croissantes, dans la région centrale de la matière à mesurer, et
  3.3) un tel faisceau de tuyaux plongeurs (2a) dans la zone de bord de la matière à mesurer.

2. Récipient collecteur suivant la revendication 1, caractérisé en ce que toutes les parties consistent en matières synthétiques non polaires et inertes.

3. Récipient collecteur suivant la revendication 2, caractérisé en ce que toutes les parties sont faites de polyéthylène ou de polypropylène.

4. Récipient collecteur suivant les revendications 2 et 3, caractérisé en ce que les parties de matières synthétiques sont reliées les unes aux autres par soudage thermique.